Europäisches Patentamt

(19) European Patent Office

Office européen des brevets

(11) Veröffentlichungsnummer: **0 023 264**
**B2**

(12) **NEUE EUROPÄISCHE PATENTSCHRIFT**

(45) Veröffentlichungstag der neuen Patentschrift:
**07.11.90**

(51) Int. Cl.⁵: **B 65 B 9/04**

(21) Anmeldenummer: **80103498.4**

(22) Anmeldetag: **23.06.80**

(54) **Verpackungsvorrichtung.**

(30) Priorität: **31.07.79 DE 2930963**

(43) Veröffentlichungstag der Anmeldung:
**04.02.81 Patentblatt 81/05**

(45) Bekanntmachung des Hinweises auf die
Patenterteilung:
**06.07.83 Patenblatt 83/27**

(45) Bekanntmachung des Hinweises auf die
Entscheidung u¨ber den Einspruch:
**07.11.90 Patentblatt 90/45**

(84) Benannte Vertragsstaaten:
**AT BE CH DE FR GB IT LI NL SE**

(56) Entgegenhaltungen:
**DE-B-1 118 090**
**FR-A-2 287 381**
**US-A-3 491 504**

(73) Patentinhaber: **Krämer & Grebe GmbH & Co. KG
Maschinen- und Modellfabrik
D-3560 Biedenkopf-Wallau (DE)**

(72) Erfinder: **Grebe Reiner
Am Hasenlauf 38
D-3560 Biedenkopf (DE)**

(74) Vertreter: **Patentanwälte Dipl.-Ing. R. Schlee
Dipl.-Ing. A. Missling
Bismarckstrasse 43
D-6300 Giessen (DE)**

EP 0 023 264 B2

**Beschreibung**

Die Erfindung betrifft eine Verpackungsvorrichtung gemäß dem Oberbegriff von Anspruch 1.

Eine derartige Verpackungsvorrichtung ist aus der DE—A—2 430 497 bekannt.

Verpackungsvorrichtungen der vorstehend genannten Art haben an der Einlaufseite von Unter- und Oberfolie eine Düsenleiste, die ein gleichmäßiges Begasen und Evakuieren mehrerer nebeneinanderliegender Verpackungen möglich macht. Dies Verpackungsmaschinen, die in der Regel eine Tiefziehstation für die behälterartige Verformung der Unterfolie und eine Schneideinrichtung für das Vereinzeln der Verpackungen aufweist, eignen sich nur für die Herstellung von Verpackungen, bei denen lediglich die Unterfolie behälterartig verformt ist. Der Grund hierfür besteht darin, daß, wenn auch die Oberfolie behälterartig verformt werden soll, beide Hälften der Evakuierungskammer beweglich ausgebildet sein müssen, damit die über den Oberrand überstehende Ware in die Verpackungsvorrichtung eingeschoben und die fertige Verpackung wieder aus der Verpackungsvorrichtung entfernt werden kann. Die Vakuumkammern sind jedoch verhältnismäßig schwer, zumal eine Vakuumkammerhälfte auch noch den Schweißrahmen aufnehmen muß. Die bewegliche Ausgestaltung beider Vakuumkammerhälften würde somit die Verpackungsmaschine erheblich komplizieren und somit verteuern.

Der Erfindung liegt die Aufgabe zugrunde, eine Verpackungsvorrichtung der eingangs genannten Art so auszubilden, daß auch bei nur einer beweglichen Vakuumkammerhälfte diese für die Herstellung von Verpackungen geeignet ist, bei denen sowohl die Unter- als auch die Oberfolie behälterartig verformt ist.

Diese Aufgabe wird mit den kennzeichnenden Merkmalen des Anspruches 1 gelöst.

Die die Unterfolie transportierende Kette hat ein wesentlich geringeres Gewicht als die Evakuierungskammer und ist zudem ausreichend flexibel, so daß diese mit Hilfe geeigneter Einrichtungen, z.B. Hydraulikzylindern, im Bereich der Evakuierungskammer abgesenkt bzw. angehoben werden kann, je nachdem, ob die untere bzw. obere Hälfte der Evakuierungskammer beweglich ausgebildet ist. Als einzig zusätzliche Maßnahme muß der Weg, den die bewegliche Evakuierungskammer angehoben bzw. abgesenkt werden muß, etwas vergrößert werden. Die Erfindung gestattet es mit geringem Aufwand Verpackungen herzustellen, bei denen sowohl die Ober- als auch die Unterfolie behälterartig verformt sind.

Ausgestaltungen der Erfindung ergeben sich aus den abhängigen Ansprüchen.

Ein Ausführungsbeispiel der Erfindung ist im folgenden anhand der Zeichnung näher beschrieben. In dieser zeigt

Fig. 1 eine Verpackungsmaschine in Seitenansicht, teilweise im Schnitt, mit einer erfindungsgemäß ausgebildeten Verpackungsvorrichtung,

Fig. 2 einen Querschnitt durch die erfindungsgemäße Verpackungsvorrichtung im geöffneten Zustand und mit abgesenkten Kettenführungen,

Fig. 3 einen Schnitt entsprechend Fig. 2, jedoch im geschlossenen Zustand und mit angehobenen Kettenführungen und

Fig. 4 einen Querschnitt durch ein weiteres Ausführungsbeispiel gemäß der Erfindung mit dreigeteilten heb- und senkbaren Kettenführungen.

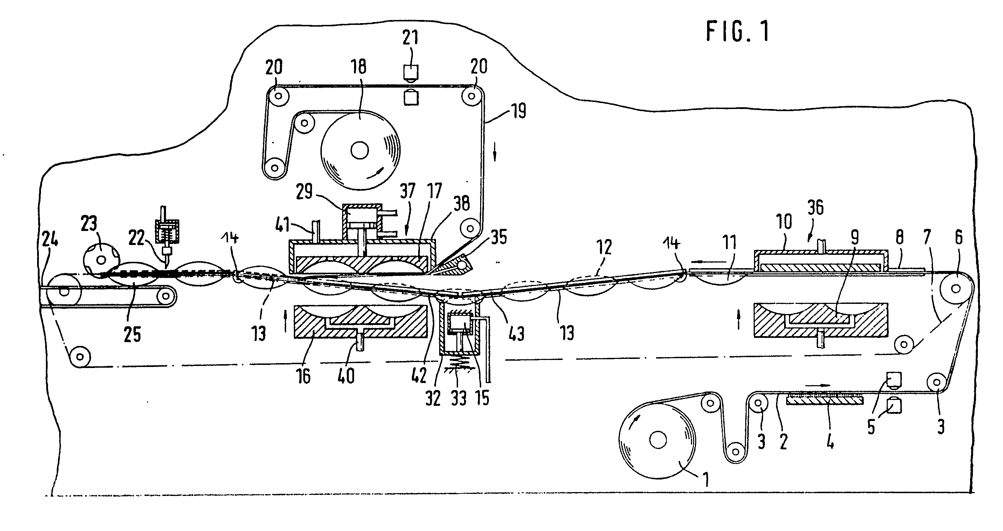

In Fig. 1 ist ein Längsschnitt durch eine Verpackungsmaschine einer erfindungsgemäßen Verpackungsvorrichtung dargestellt. Die Verpackungsmaschine besteht aus einer Abwickelvorrichtung 1 für die Unterfolie, die über Rollen 3 umgelenkt wird und anschließend über eine Heizplatte 4 geführt wird, die die Unterfolie 2 aufwärmt. Der Heizplatte 4 sind Druckmarken-Steuerköpfe 5 für die Unterfolie 2 nachgeschaltet. Diese Druckmarken-Steuerköpfe werden dann benötigt, wenn auch die Unterfolie 2 bedruckt ist und in der Siegelstation 16, 17 deckungsgleich mit der Oberfolie 19 verbunden werden soll. Die Heizplatte 4 erwärmt dabei die Unterfolie 2 so weit, daß diese in dem Bereich, in dem sie noch nicht von der Kette 7 geführt und transportiert ist, so weit dehnbar ist, daß Toleranzen ausgleichbar sind. Die Unterfolie 2 ird dann von Folientransportketten 7 an beiden Seiten in bekannter Weise gefaßt, die endlos ausgebildet sind.

Die Folientransportketten 7 sind in Kettenführungen 8 geführt, deren Teile 13 absenkbar ausgebildet sind. Zur Verformung der Unterfolie 2 dient eine Tiefziehstation 36, die ein Tiefziehform-Unterteil 9 und eine Tiefziehform-Brücke 10 aufweist. Die in Form eines Behälters 11 verformte Unterfolie 7 läuft dann in eine Verpackungsvorrichtung 37, in der die zwischenzeitlich mit Packgut 12 gefüllte behälterartig verformte Unterfolie 2 mit einer Oberfolie 19 verschweißt wird, die im gleichen Arbeitsgang behälterartig verformt wird. Im Anschluß daran wird die Verpackungsbahn einer Querschneideinrichtung 22 und einem Längsschneidmesser 23 zugeführt, die die Verpackungen 25 vereinzelt. Anschließend werden diese von einem Abführband 24 wegtransportiert.

Die Oberfolie 19, die in der Regel bedruckt ist, wird von einer Oberfolienabwicklung 18 über Umlenkrollen 20 der Verpackungsvorrichtung 37 zugeführt. Zwischen der Oberfolienabwicklung 18 und der Verpackungsvorrichtung 37 ist ein Druckmarken-Steuerkopf 21 angebracht, mit dessen Hilfe und mit dem Druckmarken-Steuerkopf 5 Unter- und Oberfolie positioniert werden.

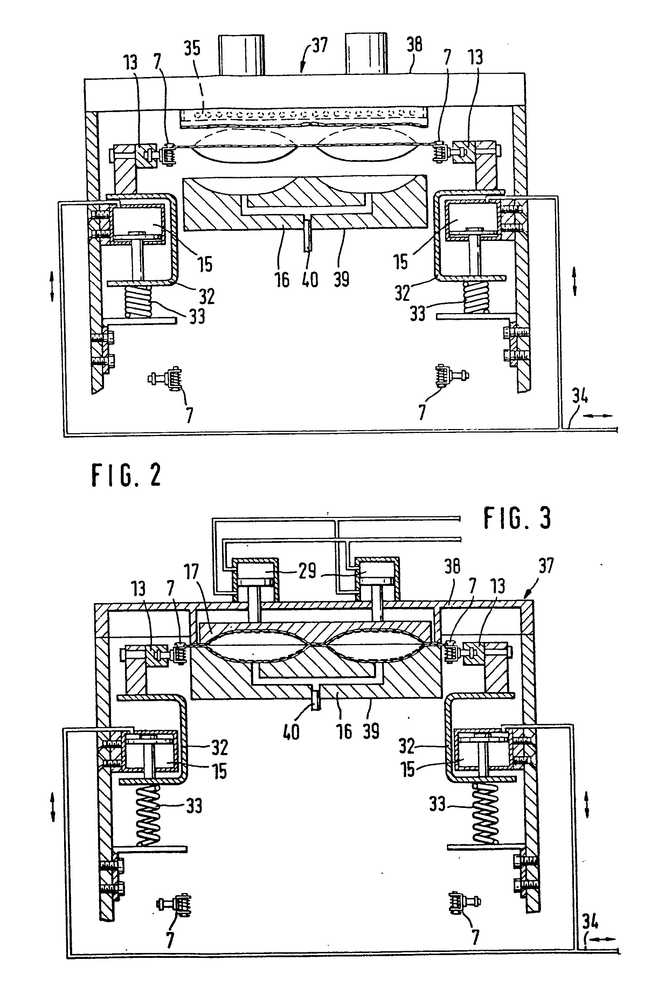

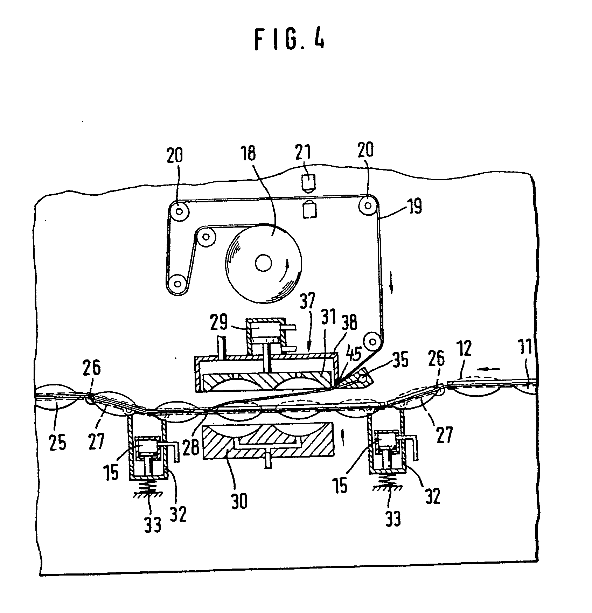

In den Fig. 2 und 3 ist ein Längsschnitt durch eine Verpackungsvorrichtung gemäß Fig. 1 im geöffneten und im geschlossenen Zustand dargestellt. Die Verpackungsvorrichtung besteht aus zwei Evakuierungskammern 38, 39, von denen die Evakuierungskammer 39 gleichzeig das Heißsiegelform-Unterteil 16 bildet. In der oberen Evakuierungskammer 38 ist ein Heißsiegelform-Oberteil 17 in vertikaler Richtung verschiebbar angeordnet. Hierzu dienen zwei Druckluftzylinder 29, deren Kolbenstangen am Heißsiegelform Oberteil 17 angreifen. In der unteren Vakuumkammer ist ein Unterdruckanschluß 40 und in der oberen Vakuumkammer ein Unterdruckanschluß 41 in bekannter Weise vorgesehen mittels derer die Unter- bzw. die Oberfolie in die Heißsiegelform hineingezogen wird. Zur Evakuierung des Inneren der Verpackung dient eine Düsenleiste 35, die quer über die Einlaufseite der Verpackungsvorrichtung 37 angeordnet ist und in eine Ausnehmung 45 der oberen Vakuumkammer 38 eingreift. Die Unterfolie 2 läuft unterhalb der Düsenleiste 35, während die Oberfolie 19 oberhalb der Düsenleiste 35 und zwischen dieser und der Vakuumkammer 38 verläuft.

Die Kettenführungsteile 13 der Kettenführungen 11 sind im Bereich der Verpackungsvorrichtung 37 absenkbar ausgebildet. Zu diesem Zweck ist die Kettenführung 8 im Bereich der Verpackungsvorrichtung 37 in zwei Teile unterteilt, wie dies Fig. 1 ziegt, deren Enden an ortsfest angeordneten Gelenken 14 befestigt sind. An den beiden gegenüberliegenden Enden 42, 43 der Kettenführungsteile greift gelenkig ein U-Profil 32 an, das mit einem Druckluftzylinder 15 verbunden ist. Der Druckluftzylinder 15 ist einseitig beaufschlagt und wird in seiner Ausgangslage durch eine Feder 33 zurückgeschoben.

Bei dem Ausführungsbeispiel nach Fig. 4 ist die Kettenführung 8 im Bereich der Verpackungsvorrichtung 37 in drei Teile 27 und 28 unterteilt, bei denen jeweils die Teile 27 gleich ausgebildet sind. Die beiden Teile 27 sind an ortsfest angeordneten Gelenken 26 angeschlossen. An diesen greifen je ein U-Profil 32 an, das, wie im vorhergehenden Ausführungsbeispiel mit einem Druckluftzylinder 15 verbunden ist. Durch diese Dreifachunterteilung der Kettenführung 8 erhält man eine gleichmäßige Absenkung im Bereich der Verpackungsvorrichtung 37.

Die Arbeitsweise der Vorrichtung ist folgende. Zuerst wird die Unterfolie 2 in der Tiefziehstation 36 behälterartig verformt und anschließend in den Bereich zwischen der Tiefziehstation 36 und der Verpackungsvorrichtung 37 die Ware in die behälterartig verformte Unterfolie 2 eingelegt. Der Transport der Verpackung erfolgt schrittweise, im vorliegenden Ausführungsbeispiel wird das Band jeweils um die Breite von zwei Verpackungen 25 vorgeschoben. Bei jedem taktweisen Verschieben der Folien wird die untere Vakuumkammerhälfte 16 geöffnet und mit Hilfe des bzw. der Preßluftzylinder 15 die Kettenführungsteile 13 bzw. 27, 28 abgesenkt. Hierdurch gewinnt der obere Rand der unteren Verpackung einen ausreichenden Abstand von der Düsenleiste 35 und der feststehenden oberen Evakuierungskammer 38, so daß die Verpackungen einschließlich der über die Oberfolie 19 überstehenden Ware in die Verpackungsvorrichtung 37 eingeschoben werden können. Anschließend wird die untere Vakuumkammerhälfte 39 wieder angehoben, wie dies in Fig. 3 dargestellt ist. Hierbei befindet sich jedoch das Heißsiegelform-Oberteil 17 in angehobener Stellung. Im Anschluß hieran wird die obere und untere Vakuumkammerhälfte evakuiert und gleichzeitig bzw. anschließend das Innere der Verpackung über die Düsenleiste 35. Anschließend wird das Heißsiegelform-Oberteil 17 mit Hilfe der Zylinder 29 abgesenkt, wodurch die Unter- und die Oberfolie miteinander verschweißt werden. Anschließend wird die untere Vakuumkammerhälfte 39 abgesenkt, gleichfalls die Kettenführungen, so daß nunmehr ein taktweise Vorschieben von Unter- und Oberfolie vorgenommen werden kann. Die Heizplattte 4, die zur Erwärmung der Unterfolie dient, hat die Aufgabe, daß durch angepaßte Dehnung der Unter- und Oberfolie diese derart justiert werden können, daß beim Siegelvorgang diese in der vorbestimmten Art und Weise übereinanderliegend verschweißt werden können.

**Patentansprüche**

1. Verpackungsvorrichtung für eine mit einer Oberfolie (19) zu verschließende Verpackung, mit einer rahmenartig ausgebildeten und mit einem eigenen Antrieb (29) versehenen Schweißvorrichtung (16, 17) zum Verschweißen einer Unter- und der Oberfolie (2, 19), von denen zumindest die Unterfolie (2) behälterartig verformt ist und von einer Kette (7) an den Seiten gehalten durch die Verpackungsvorrichtung (37) transportiert wird, und mit einer Evakuierungskammer, die zwei relativ zueinander in vertikaler Richtung verstellbare kastenartige Hälften (38, 39) hat, wobei eine Hälfte die Schweißvorrichtung (17) aufnimmt und die obere Hälfte (38) der Evakuierungskammer an der Einlaufseite ihres an der gegenüberliegenden Hälfte (39) anliegenden Randes eine Ausnehmung (45) aufweist, in die eine mit einer Zuführleitung verbundene Düsenleiste (35) zwischen die Unterfolie (2) und Oberfolie (19) liegend eingreift und relativ zu den beiden Hälften der Evakuierungskammer (38, 39) beweglich ist und bei geöffneter Evakuierungskammer einen Abstand sowohl zur unteren als auch zur oberen Kammerhälfte hat, dadurch gekennzeichnet, daß die eine Hälfte (38) der Evakuierungskammer ortsfest und die andere Hälfte (39) heb- und senkbar ist und daß die die Unterfolie (2) transportierende Kette (7) zumindest im Bereich der Verpackungsvorrichtung (37) relativ zur ortsfest angeordneten Hälfte (38) der Evakuierungskammer mittels eines Antriebes (15) für die Kettenführungen (8) heb- und senkbar angeordnet ist.

2. Verpackungsvorrichtung nach Anspruch 1, dadurch gekennzeichnet, daß die Führungen (13; 27, 28) mehrteilig ausgebildet sind, daß an einem oder mehreren Abschnitten Antriebe (15) zum Heben und Senken der Führungen angebracht sind.

3. Verpackungsvorrichtung nach Anspruch 1 oder 2, dadurch gekennzeichnet, daß zwischen der Unterfolienabwickelvorrichtung (1) und der Tiefziehstation (36) eine Heizeinrichtung (4) für die Erwärmung der Unterfolie angeordnet ist.

## Revendications

1. Dispositif de conditionnement pour un conditionnement devant être fermé par une feuille supérieure (19), comportant un dispositif de soudure (16—17) en forme de cadre, et pourvu d'un actionnement propre (29) pour souder une feuille inférieure avec la feuille supérieure (2, 19), ladite feuille inférieure (2) au moins recevant la forme d'un réceptacle et étant transportée à travers le dispositif de conditionnement (37), en étant supportée sur les côtés par une chaîne (7), ainsi qu'une chambre d'évacuation, qui comporte deux moitiés (38—39) formant une boîte, mobiles verticalement l'une par rapport à l'autre, l'une des moieties recevant le dispositif de soudure (17), la moitié supérieure (38) de la chambre d'évacuation présentant, du côté d'entrée de son bord voisin de la moitié opposée (39), un évidement (45), dans lequel une barrette à ajutages (35), reliée à une conduite d'amenée, est engagée entre la feuille inférieure (2) et la feuille supérieure (19, est mobile par rapport aux deux moitiés de la chambre d'évacuation (38 et 39), et, lorsque ladite chambre d'évacuation est ouverte, est écartée aussi bien de la moitié inférieure de la chambre que de sa moitié supérieure, dispositif caractérisé par le fait qu'une moitié (38) de la chambre d'évacuation est montée fixe, et l'autre moitié (39) peut être soulevée et abaissée, et que la chaîne (7), qui transporte la feuille inférieure (2), est disposée, tout au moins dans la zone du dispositif de conditionnement (37), de façon à pouvoir être soulevée et abaissée par rapport à la moitié fixe (38) de la chambre d'évacuation au moyen d'un dispositif (15) de déplacement des guides (8) de chaîne.

2. Dispositif de conditionnement selon la revendication 1, caractérisé par le fait que les guidages (13, 27, 28) sont en plusieurs parties, et que des dispositifs (15) pour soulever et abaisser les guidages sont montés dans une ou plusieurs sections.

3. Dispositif de conditionnement selon l'une des revendications 1 ou 2, caractérisé par le fait qu'un dispositif de chauffage (4), pour réchauffer la feuille inférieure, est placé entre la bobine (1) de déroulage de la feuille inférieure et le poste d'emboutissage (36).

## Claims

1. A packing device for a packing to be closed with an upper sheet (19), with a welding device (16, 17) which is constructed so as to be frame-like and is provided with its own drive (29), for welding a lower and an upper sheet (2, 19), of which at least the lower sheet (2) is formed in the manner of a container and is held at the sides by a chain (7) and transported through the packing device (37), and with an evacuation chamber which has two box-like halvès (38, 39) which are movable relative to one another in the vertical direction, and one half accommodates the welding device (17) and the upper half (38) of the evacuation chamber has, on the entry side of its edge abutting against the opposite half (39), a recess (45) into which there engages horizontally, between the lower sheet (Z) and upper sheet (19), a nozzle lip (35) which is connected to a supply line and which is movable relative to the two halves of the evacuation chamber (38, 39) and which, when the evacuation chamber is opened, comprises a spacing with respect to both the lower and the upper chamber half, characterised in that one half (38) of the evacuation chamber is stationary and the other half (39) can be raised and lowered, and in that the chain (7) transporting the lower sheet (2) is arranged so that it can be raised and lowered at least in the region of the packing device (37) relative to the stationarily arranged half (38) of the evacuation chamber, by means of a drive (15) for the chain guides (8).

2. A packing device according to claim 1, characterised in that the guides (13; 27, 28) are of multi-part construction, and in that drives (15) are arranged on one or more sections, for raising and lowering the guides.

3. A packing device according to claim 1 or 2, characterised in that between the lower sheet winding device (1) and the deep-drawing station (36) there is arranged a heating device (4) for heating the lower sheet.

FIG. 1

FIG. 2

FIG. 3

# FIG. 4